# EUROPÄISCHE PATENTSCHRIFT

(11) **EP 0 646 061 B1**
(45) Veröffentlichungstag und Bekanntmachung des Hinweises auf die Patenterteilung: **17.07.1996**
(21) Anmeldenummer: 92902603.7
(22) Anmeldetag: 18.12.1991
(51) Int. Cl.: B32B 7/04, A41D 27/02

(54) **INNENAUSKLEIDUNG UND VERFAHREN ZU IHRER HERSTELLUNG**
INNER LINING AND PROCESS FOR MAKING IT
DOUBLURE INTERIEURE ET SON PROCEDE DE PRODUCTION

(30) Priorität: 27.03.1991 CH 929/91
(43) Veröffentlichungstag der Anmeldung: 05.04.1995
(73) Patentinhaber: Loos, Paul, A-4600 Thalheim b. Wels (AT)
(72) Erfinder: Loos, Paul, A-4600 Thalheim b. Wels (AT)
(74) Vertreter: Kaminski, Susanne, Dr.
(86) Internationale Anmeldenummer: EP9102443
(87) Internationale Veröffentlichungsnummer: WO9217332

(56) Entgegenhaltungen:
- WO-A-89/07523

## Beschreibung

Die Erfindung bezieht sich auf eine Innenauskleidung für einen Ausrüstungsgegenstand zum wenigstens zeitweisen Bedecken von Körperteilen, wie Kleidungsstück, Decke oder Schlafsack, die aus wenigstens je einer Schicht von miteinander an Verbindungslinien verbundenen Schnitt-Teilen wenigstens eines textilen Stoffs und wenigstens einer semipermeablen Membran besteht, nach dem Oberbegriff des Anspruchs 1 und auf ein Verfahren zu ihrer Herstellung.

Verbindungen von textilen Stoffen mit semipermeablen Membranen werden in vielfältiger Art und Weise für die unterschiedlichsten Anwendungsfälle eingesetzt. Insbesondere bei Arbeiten im Freien, bei der Ausübung von bestimmten Sportarten und bei Freizeitaktivitäten erweist sich der Einsatz von semipermeablen Membranen als vorteilhaft; ist doch deren Eigenschaft, Körperschweiss durchzulassen, Regenwasser hingegen nicht, insbesondere für Kleidungsstücke äusserst wünschenswert.

Demzufolge werden Sport-, Arbeits- und Freizeitbekleidungsstücke unter Verwendung derartiger Membrane hergestellt, wobei diese - relativ dünnen - Membranen im allgemeinen Bestandteil von Innenauskleidungen zusammen mit anderen Futterstoffen sind. Diese anderen Futterstoffe, die textile Stoffe unterschiedlichster Art sein können, sind im Gegensatz zu der semipermeablen Membran im wesentlichen wasserdurchlässig. Sie dienen als Zwischenschicht gegenüber dem Körper oder auch gegenüber dem deckenden Obermaterial. Es darf durch sie die vorteilhafte Wirkung der semipermeablen Membran nicht oder nur kaum vermindert werden.

Aufgrund der unterschiedlichen Eigenschaften von Membran und textilem Stoff ist sowohl deren gemeinsame Verarbeitung problematisch als auch der Tragekomfort von damit ausgestatteten Kleidungsstückes nicht immer optimal.

Anhand von Skihandschuhen, bei denen semipermeable Membrane als ein Bestandteil der Innenauskleidung gemeinsam mit anderen, insbesondere wärmedämmenden, textilen Futterstoffen verwendet werden, sind Nachteile von konventionell ausgestatteten und Vorteile von solchen, die mit dem erfindungsgemässen Schichtmaterial ausgestattet sind, leicht erkennbar.

Die einzelnen Schnitt-Teile für das Handschuh-Futter werden sowohl für die Membran als auch für den textilen Futterstoff zugeschnitten und müssen zusammengefügt werden. Da beim Zusammennähen der Membran-Schnitteile die Handschuh-Innenauskleidung an den Nahtstichen durchlässig werden würde, müssen diese verklebt oder verschweisst werden, oder es müssen wenigstens nach allfälligem Zusammennähen die Nähte mit einem dichtenden Mittel überdeckt werden. Die Schnitt-Teile aus dem textilen Futterstoff hingegen werden in üblicher Weise zusammengenäht. Die beiden so erhaltenen Futterschichten aus textilem Stoff und Membran werden sodann gemeinsam an das Handschuh-Obermaterial angenäht. Das der Hand zugekehrte, wärmedämmende textile Stoff-Futter, das dazu tendiert, an der immer etwas feuchten Hand zu haften, wird beim Ausziehen des Handschuhs unter gleichzeitigem Umstülpen leicht aus dem Handschuh herausgezogen werden, insbesondere da die zwischen Stoff-Futter und Handschuh-Obermaterial liegende Membran glatte und, aufgrund ihrer wasserabstossenden Eigenschaft, trockene Oberflächen hat. Deswegen werden beispielsweise bei den bekannten Handschuh-Futtern Stoff- und Membran-Futter an einigen Stellen über spezielle Membranlaschen miteinander verbunden. Damit soll verhindert werden, dass sich Membran und Stoff-Futter beim Ausziehen des Handschuhs voneinander lösen können. Dies ist mit einem zusätzlichen Arbeitsaufwand beim Zuschneiden und einer komplizierten Nähtechnik bei der Futterherstellung verbunden, da ja, wie bereits dargestellt, die Membranteile nicht durchstochen, also auch nicht durchnäht werden dürfen. Aber auch diese Verbindung von Membran und Stoff-Futter verhindert nicht, dass das Futter, wenn auch als ganzes, aus dem Handschuh gezogen werden kann, gleitet doch das Membran-Futter gut im Handschuh. Gerade beim Sport ist dies sehr unangenehm, da mit klammen oder feuchten Fingern die Innenauskleidung wieder richtig in den Handschuh hineingesteckt werden muss, was sehr schwierig ist.

In der WO 89/07523 wird dargestellt, wie - insbesondere semipermeable - Membranen mit dehnbarem, - insbesondere gestricktem oder gewirktem - textilem Material ein- oder auch zweiseitig zu verbinden ist, um beispielsweise Innenfutter für Handschuhe und Socken, bzw. Handschuhe und Socken selbst, herzustellen. Derartige Handschuhe oder Socken sollen sich durch besonderen Tragekomfort - in bezug auf Wasserabstossung und Wärmeisolation - auszeichnen, was einerseits auf den vollständigen Verzicht von Perforationen der Membran und andererseits auf die kleinste Luftkammern bildende Kräuselung bei der Herstellung zurückzuführen ist. Allerdings ist die Herstellung solcher Handschuhe oder Socken bzw. deren Innenfutter auf die Verwendung von fertig gewirkten bzw. gestrickten Handschuh- bzw. Socken-Textilschichten beschränkt, die gedehnt und mit Membranschicht-Teilen belegt und grossflächig partiell verklebt werden, wobei die Membranschicht-Teile an ihren Überlappungen miteinander verschweisst werden. Eine weitere textile Schicht kann auf die andere Seite der Membranschicht nur über nochmaliges Dehnen der Membran-Textilschicht und der weiteren Textilschicht und durch analoges Verkleben aufgebracht, bzw. in oben dargestellter Weise über schlaufenähnliche Ansätze befestigt werden.

Kleidungsstücke, für die andere, als dehnbare, d.h. insbesondere gewirkte oder gestrickte, textile Stoffmaterialien verwendet werden sollen, können auf diese in der WO 89/07523 beschriebene Art und Weise nicht mit einem eine semipermeable Membran enthaltenden Innenfutter versehen werden. Ebensowenig eignet sich diese Herstellungsart für schneidertechnisch komplizierte Kleidungsstücke, wobei auf gute Passform, die den Konfektionsgrössen entsprechen, Wert gelegt wird. Dass ein Kleidungsstück, bzw. dessen Innenfutter, das auf diese Art hergestellt wurde, d.h. Dehnen - (Heiss-)Verkleben - Zusammenschrumpfen und gegebenenfalls neuerlichem Dehnen - (Heiss-)Verkleben - Zusammenschrumpfen, nur begrenzt diese Forderung erfüllen wird, ist zu erwarten.

Die Erfindung hat sich demgegenüber die Aufgabe gestellt, eine Innenauskleidung zur Verfügung zu stellen, bei der die oben aufgeführten Nachteile vermieden werden. Das geschieht durch die Verwirklichung der kennzeichnenden Merkmale des Anspruchs 1.

Das Verfahren zur Herstellung einer erfindungsgemässen Innenauskleidung wird durch die kennzeichnenden Merkmale des Anspruchs 6 beschrieben.

Vorteilhafte Weiterbildungen werden in den kennzeichnenden Merkmalen der abhängigen Ansprüche beschrieben.

Für Innenauskleidungen von Kleidungsstücken, wie beispielsweise von Handschuhen, bei denen eine Vielzahl von Schnitt-Teilen untereinander zu verbinden ist, können die Schnitt-Teile der Membran-Futterschicht in bekannter Weise, beispielsweise durch Schweissen, miteinander verbunden werden, wohingegen die Schnitt-Teile der Stoff-Futterschicht in üblicher, arbeitssparender Weise miteinander vernäht werden können. Diese beiden Futterschichten, die über ihre gesamte gemeinsame Fläche semipermeabel miteinander verbunden sind, haften rutschfest aufeinander, die Innenauskleidung als ganze weist die erwünschten Eigenschaften der Membranschicht selbst auf.

Alternativ - wenn auch arbeitsaufwendiger - können Membran- und textile Stoffschicht zuerst über ihre gesamte Fläche rutschfest und semipermeabel verbunden werden, dann in die erforderlichen Teile geschnitten und in die gewünschte Form zusammengefügt, beispielsweise genäht, werden, wonach diese Verbindungslinien, um allfällige Perforationen in der Membran abzudichten, nachgeschweisst bzw. versiegelt werden. Eine weitere, aus gegengleich verbundenen, vorzugsweise zusammengenähten, Schnitt-Teilen bestehende, textile Schicht wird daraufhin mit der anderen Membranseite, wiederum über die gesamte gemeinsame Fläche rutschfest und semipermeabel verbunden. Diese etwas aufwendigere Verarbeitungsart kann aber für bestimmte, beispielsweise besonders feste Nähte erfordernde, Kleidungsstücke von Vorteil sein. Auch kann auf bereits vorgefertigten Schichtmaterial, das aus Membran und wenigstens einer an deren einer Seite mit dieser verbundenen textilen Stoffschicht, zurückgegriffen werden.

Wird die Membran-Futterschicht beidseitig mit einer Stoff-Futterschicht in erfindungsgemässer Weise verbunden, so zeichnet sich ein mit einer derartigen Innenauskleidung ausgestattetes Kleidungsstück durch besonderen Tragekomfort aus. Die oben anhand eines Handschuhs mit konventionellem Innenfutter dargestellten Nachteile werden vermieden.

Ist die Membranschicht an ihren beiden Flächen mit einer textilen Stoffschicht verbunden, so besitzt die Innenauskleidung in ihrer Gesamtheit die gewünschten Eigenschaften der Membran, wirkt aber wie ein einziger, textiler Stoff, mit gegebenenfalls unterschiedlichen Oberflächen. So kann an einer Seite der Membranschicht ein Vlies vorgesehen sein, an ihrer anderen Seite aber ein wärmedämmender Faserpelz. Wird die aus einer textilen Stoff- und einer semipermeablen Membranschicht bestehende Innenauskleidung ein- oder beidseitig mit einer weiteren textilen Stoff- oder auch einer weiteren Membranschicht verbunden, sind Innenauskleidungen möglich, die eine Kombination von verschiedenartigen, den textilen Stoffen, bzw. den unterschiedlichen Membranen zuordenbaren Eigenschaften denkbar machen, wobei jede dieser Schichten, ob textile oder Membran-Schicht aus miteinander verbundenen Schnitt-Teilen besteht. Die jeweilige Verbindungsart kann dabei jeweils ganz unabhängig von der einer anderen Schicht erfolgen, und ganz der Qualität des jeweiligen Materiales angepasst werden.

Die flächige Verbindung der verschiedenen Schichten miteinander bedingt ausserdem eine gewisse Versteifung und damit - was gerade auch für bestimmte Anwendungen als Futtermaterial von Vorteil ist - eine Erhöhung der Formstabilität.

Der an sich widersprüchlichen Forderung nach flächiger, rutschfester Verbindung der Membran-Schicht mit der textilen Stoff-Schicht bei gleichzeitiger Wahrung der semipermeablen Qualität auch des Schichtmaterials wird durch einen, vorzugsweise im wesentlichen über die gesamte Verbindungsfläche der beiden Schichten partiell, aber gleichverteilt aufgebrachten Haftstoff entsprochen, insbesondere wenn er beispielsweise in Form einer Vielzahl von Punkten aufgebracht wird.

Zur Verbindung der einzelnen Schichten kann das partiell aufzubringende Haftmittel vor deren Verarbeitung auf die einzelnen Schichten aufgebracht werden. Dazu erweist sich insbesondere ein aktivierbares Haftmittel von Vorteil, da so die Arbeitsabläufe nicht behindert werden und die verarbeiteten, d.h. aus zugeschnittenen und zusammengefügten Schnitt-Teilen bestehenden Schichten flächendeckend aufeinander angeordnet und ausgerichtet werden können. Das Haftmittel wird erst anschliessend aktiviert, beispielsweise durch Hitze oder auch Druck, die einzelnen Schichten, ob bereits bearbeitet oder nicht (wie bei der oben dargestellten, etwas arbeitsaufwendigeren Alternative), werden in gewünschter Weise miteinander verbunden.

Sollen mehrere Schichten aus textilen Stoffen und/oder Membranen in erfindungsgemässer Weise miteinander verbunden werden, so können die textilen Schichten untereinander in bekannter Weise durch Kaschieren, z.B. durch Flammkaschieren, miteinander verbunden werden. Es ist allerdings dabei darauf zu achten, dass die Eigenschaften der semipermeablen Membran durch die Art der Kaschierung nicht in negativer Weise beeinflusst werden. So wird in jedem Fall, auch bei der Verbindung von textilen Stoffschichten untereinander, darauf zu achten sein, dass das Verbindungsmittel, z.B. das Haftmittel, zwischen Membran- und Stoff-Schichten, zwar gleichmässig verteilt, aber nur partiell, oder selbst semipermeabel auf die jeweiligen Schichten aufgetragen wird.

Das Haftmittel, aktvierbar oder sofortklebend, kann aber auch erst nach der Verarbeitung, dem Zusammenfügen von Schnitt-Teilen beispielsweise, aufgetragen, z.B. aufgesprüht, werden.

Zeichnet sich auch eine erfindungsgemässe Innenauskleidung durch die oben genannten Vorteile aus, wie z.B. einen guten, im allgemeinen rutschfesten, Sitz in der äusseren Umhüllung, so wird dieser noch verbessert, wenn zusätzlich diese äussere Umhüllung analog zu der beschriebenen Art und Weise mit der Innenauskleidung verbunden wird, gegebenenfalls über aktivierbare Haftstoffe. Handelt es sich bei dem Material der äusseren Umhüllung beispielsweise um Leder, so sollte dieses vorzugsweise nicht mit der Membranschicht der Innenauskleidung, sondern mit der äusseren von zwei, die Membranschicht zwischen sich aufnehmenden Textilschichten verbunden sein.

Die Erfindung wird im folgenden anhand der Zeichnung beispielhaft beschrieben. Es zeigen
- Fig.1: einen Schnitt durch ein Schichtmaterial mit einer Membran und einer textilen Stoffschicht;
- Fig.2: einen Schnitt durch ein Schichtmaterial mit mehreren Schichten, insbesondere aus textilen Stoffen;
- Fig.3: einen Schnitt durch eine erfindungsgemässe Innenauskleidung mit jeweiligen Verbindunglinien von Membran bzw. Stoff-Schnitt-Teilen; und
- Fig.4: einen Schnitt entsprechend Fig.3 durch eine anders hergestellte Innenauskleidungs-Variante.

Membran und Stoffschicht, ob verarbeitet oder nicht, werden im folgenden mit Bezugsziffern bezeichnet, wobei gleiche, aber unterschiedlich angeordnete Schichten sich nur durch einen Buchstabenindex unterscheiden. Schnitt-Teile dieser Stoff- bzw. Membran-Schichten erhalten einen Strichindex.

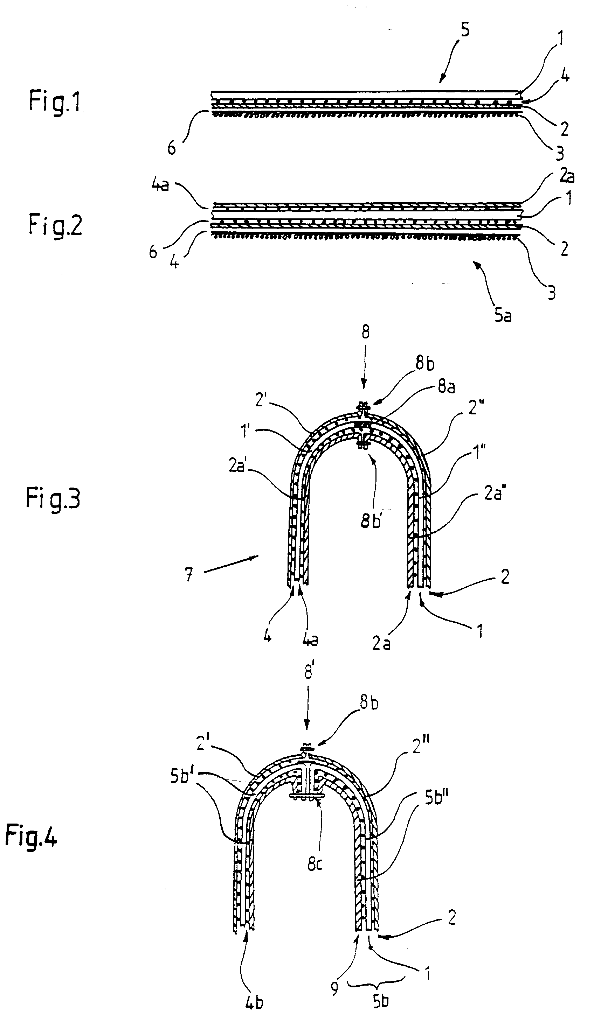

In Fig.1 ist ein Schichtmaterial 5 dargestellt, das aus einer Membran-Schicht 1 und einer textilen Stoffschicht 2,3 besteht.

Die Membran 1 besteht aus semipermeablem Material, das, für Sportbekleidungszwecke beispielsweise, zwar schweissdurchlässig, aber wasserundurchlässig bzw. -abweisend ist. Die textile Stoffschicht 2,3 besteht hier aus zwei Stoffschichten, einer ersten Stoffschicht 2 und einer weiteren Stoffschicht 3. Die erste Stoffschicht 2 besteht beispielsweise aus dünnem Vliesmaterial, das sich wenig verzieht und somit bei der Verarbeitung der beiden textilen Stoffschichten 2,3 als Naht-Hilfe dient. Die weitere Stoffschicht 3, hier aus flauschigem Velours, ist mit der ersten Stoffschicht 2, dem Vlies, durch leichte Kaschierung 6 verbunden. Die beiden textilen Stoffschichten 2,3 sind über die (zunächst) freie (in Fig.1 obere) Kontaktfläche mit der Membran 1 über eine Haftschicht 4 verbunden, die in Form einer Vielzahl von Punkten auf die textile Stoffschicht 2,3 und/oder die Membranschicht 1 aufgebracht ist. Die Art des Auftragens der Haftschicht 4 ist wichtig, damit die Durchlässigkeit der Membran 1 auch für das Schichtmaterial 5 als ganzes gewahrt bleibt.

Die Haftschicht 4 kann für ein Schichtmaterial 5, das in Bahnen weiterverarbeitet werden soll, wie beispielsweise für Schlafsack-Innenauskleidungen, sofortklebend sein, so dass beim Kaschieren der beiden textilen Stoffschichten 2 und 3 im selben Arbeitsgang auch das Verbinden mit der Membran 1 vor sich gehen kann. Werden allerdings, wie beispielsweise bei Handschuh-Futtern, aufwendigere Verarbeitungsschritte mit vielfältig zu verbindenden Schnitt-Teilen notwendig, so wird eine Haftschicht 4, die erst aktiviert werden muss, vorzuziehen sein.

Die Haftschicht 4 kann entweder auf die erste textile Schicht 2 oder auf die Membranschicht 1 aufgetragen werden, jedoch wird das Auftragen auf die textile Schicht 2 vorzuziehen sein, da es im selben Arbeitsgang wie das Versehen mit einem Verbindungsmittel 6 erfolgen kann. Dieses Verbindungsmittel 6 und die Haftschicht 4 könnten somit in gleicher Weise, streifen- oder gitterförmig, oder in Form einer Vielzahl von Punkten aufgetragen werden.

Das Verbindungsmittel 6 kann eine, wie oben beschrieben aufgebrachte, Kaschiermasse oder eine Haftschicht sein. Wird es vollflächig aufgetragen, so ist wesentlich, dass es permeabel oder in gleicher Weise semipermeabel wirkt wie die Membran selbst. Auch eine partielle Verbindung über Fasern, wie sie beispielsweise bei Flammkaschierung erreicht wird, ist möglich.

In Fig.2 ist ein aus mehreren Schichten bestehendes Schichtmaterial 5a dargestellt. Die Membranschicht 1 ist hier beidseitig über Haftschichten 4 und 4a mit textilen Stoffschichten 2,3 und 2a verbunden. Da die Membran 1 beidseitig flächendeckend von Stoffschichten abgedeckt ist und die Verbindung mit den einzelnen Schichten 1; 2,3 und 2a rutschfest ist, wirkt das Schichtmaterial 5a in seiner Gesamtheit wie ein Textil mit den Eigenschaften der dazwischenliegenden Membran 1.

In Fig.3 ist ein Teil-Schnitt durch eine erfindungsgemässe Innenauskleidung, und zwar durch die Fingerkuppe 7 eines Handschuhfinger-Futters, dargestellt. Dazu wurde die Membran 1 in die erforderlichen Schnitt-Teile 1' und 1'', die textilen Stoffschichten 2 und 2a in die erforderlichen Schnitt-Teile 2' und 2'', bzw. 2a'und 2a'' geschnitten.

Die Teile l' und l'' wurden daraufhin in bekannter Weise, beispielsweise unter Bildung einer Schweiss-Verbindungslinie 8a, zusammengefügt. Damit bleibt die Membran 1 unverletzt, da sie nicht wie beim Nähen durchstochen wird, und die Membran-Futterschicht ist somit als ganzes einwandfrei semipermeabel. Die Schnitt-Teile 2' und 2'' bzw. 2a' und 2a'' wurden in üblicher Weise an der Verbindungslinie 8 zusammengenäht und bilden somit die beiden Stoff-Futterschichten 2 bzw. 2a. Danach werden die resultierenden einzelnen Futterschichten 1, 2 und 2a flächendeckend und korrekt ausgerichtet übereinander angeordnet, vorzugsweise über ein Handmodell gestülpt, und entweder von aussen und/oder - über ein heizbares Handmodell - von innen erwärmt, so dass die Haftschichten 4 und 4a zwischen Membran-Futterschicht 1 und Stoff-Futterschichten 2 bzw. 2a aktiviert werden. Alle drei Futterschichten 1, 2 und 2a bilden nun eine einzige Futterschicht mit semipermeabler Eigenschaft bei textiler Qualität.

Da die Nähte 8b und 8b' an den beiden Stoff-Futterschichten 2 und 2a, um auch gerade an den Verbindungslinien 8 eine bestmögliche Klebeverbindung mit der Membran-Futterschicht 1 zu gewährleisten, in der in Fig.3 dargestellten Art von der Membran-Futterschicht 1 abgewandt liegen sollten, muss beim Zuschneiden der sich jeweils entsprechenden Stoff-Futterteile darauf geachtet werden, dass diese gegengleich zugeschnitten werden.

Fig.4 zeigt eine Alternative zu dieser Innenauskleidung, bei der nicht - und damit unterschiedlich zu Fig.3 - Membran 1 und textile Stoffschichten 2 und 2a unabhängig voneinander in die erforderlichen Schnitt-Teile 1' und 1'', 2' und 2'' bzw. 2a' und 2a'' geschnitten wurden. Es wird hier von einem der Fig.1 entsprechenden Schichtmaterial 5b ausgegangen, bei dem eine Membran 1 und wenigstens eine - zweite - textile Stoffschicht 9 über einen Haftstoff 4b in oben geschriebener Weise semipermeabel über ihre gesamte Fläche miteinander verbunden sind. Dieses Schichtmaterial 5b wird dann in die erforderlichen Schnitt-Teile 5b' und 5b'' geschnitten und an der Verbindungslinie 8c zusammengefügt, beispielsweise genäht. Da dabei Perforationen in der Membran 1 entstehen können, wodurch deren Semipermeabilität vermindert wird, müssen diese Verbindungslinien 8c noch zusätzlich geschweisst bzw. versiegelt werden. Die textile Stoff-Schicht 2 allerdings wird für sich - gegebenenfalls gemeinsam mit einer ebenfalls textilen Schicht, die beispielsweise aufkaschiert ist - in Schnitt-Teile 2' und 2'' geschnitten, die an der Verbindungslinie 8b miteinander verbunden, beispielsweise genäht, werden. Die Naht 8b weist dabei vorteilhafterweise nach aussen, von der Membran 1 weg, so dass bei der Verbindung der beiden Innenfutterschichten 5b und 2 mittels des Haftstoffes 4 auch und gerade an der allen Schicht-Schnitt-Teilen gemeinsamen Verbindungslinie 8' eine einwandfreie Haftung bei gleichzeitiger Wahrung der Semipermeabilität des Innenfutters als ganzes gewährleistet ist.

Das fertige Futter wird dann, beispielsweise in den Handschuh, eingezogen.

Kommt zwar bei den in Fig.3 und 4 dargestellten Innenauskleidungen jeweils die textile Stoffschicht 2 in Kontakt mit der Innenseite des Handschuhs, womit beim Ausziehen des Handschuhs das gleichzeitige Herausziehen des Innenfutters erheblich erschwert wird, so wird dies über eine zusätzlich an der textilen Schicht 2 in beschriebener Weise aufgebrachte Haftschicht, die - beispielsweise nach Aktivierung - Aussen-Handschuh und Innenauskleidung fest verbindet, verunmöglicht.

Ein breiter Spielraum besteht in der Auswahl und Zusammensetzung der einzelnen textilen Futterschichten, die, wie anhand von Fig.2 beschrieben, auch untereinander kombiniert werden können.

Eine weitere Anwendungsmöglichkeit besteht darin, dass eine derartige Innenauskleidung aus mehreren Schichten bestehen kann, so ist auch die Kombination unterschiedlicher Membrane mit verschiedenen Eigenschaften denkbar.

## Patentansprüche

1. Innenauskleidung für einen Ausrüstungsgegenstand zum wenigstens zeitweisen Bedecken von Körperteilen, wie Kleidungsstück, Decke oder Schlafsack, die aus wenigstens je einer Schicht von miteinander an Verbindungslinien verbundenen Schnitt-Teilen wenigstens eines textilen Stoffs (2) einerseits und wenigstens einer semipermeablen Membran (1) andererseits besteht, wobei die einzelnen Schichten rutschfest und semipermeabel über ihre gesamte gemeinsame Fläche miteinander verbunden sind, wobei die Verbindungslinien (8a) der Membranteile (1',1'') geschweisst sind, dadurch gekennzeichnet, dass die Verbindungslinien (8b) der Teile (2',2'') eines ersten textilen Stoffs unabhängig von der Membran (1) miteinander verbunden, vorzugsweise genäht, sind.

2. Innenauskleidung nach Anspruch 1, mit wenigstens zwei textilen Schichten, wobei die Membran-Schicht (1) zwischen zwei textilen Schichten (2,9) angeordnet ist, dadurch gekennzeichnet, dass alle Schichten (1,2,9) rutschfest und semipermeabel über ihre gesamte gemeinsame Fläche miteinander verbunden sind und die Membran-Schicht (1) gemeinsame Verbindungslinien (8c) mit einer zweiten textilen Stoff-Schicht (9) aufweist, die geschweisst bzw. heissgesiegelt, und vorzugsweise auch genäht sind.

3. Innenauskleidung nach Anspruch 1 oder 2, dadurch gekennzeichnet, dass ein- oder beidseitig der semipermeabel miteinander verbundenen textilen Stoff-Schicht(en) (2) und der Membran-Schicht (1) wenigstens eine weitere textile Stoff-Schicht (2a) und/oder wenigstens eine weitere semipermeable Membran-Schicht angeordnet ist, die wiederum im wesentlichen über die ganze Fläche rutschfest und semipermeabel mit der semipermeabel verbundenen textilen Stoff-Membran-Schicht (1,2) verbunden ist, wobei die Verbindungslinien der Teile der weiteren Membran geschweisst sind, während die Verbindungslinien (8b) des weiteren textilen Stoffs (2a',2a'') unabhängig von der ersten und/oder der weiteren Membran miteinander verbunden, vorzugsweise genäht, sind.

4. Innenauskleidung nach einem der Ansprüche 1 bis 3, dadurch gekennzeichnet, dass wenigstens zwei Schichten (1,2) durch eine semipermeable oder partiell - insbesondere in Form einer Vielzahl von Punkten - an ihrer Kontaktfläche aufgebrachte - gegebenenfalls aktivierbare - Haftschicht (4) miteinander verbunden sind.

5. Innenauskleidung nach einem der vorhergehenden Ansprüche, dadurch gekennzeichnet, dass sie wenigstens zwei unmittelbar miteinander flächig verbundene textile Stoffschichten enthält.

6. Verfahren zur Herstellung einer Innenauskleidung nach einem der Ansprüche 1 bis 5, bei dem wenigstens eine textile Stoff-Schicht (2) und wenigstens eine Membran-Schicht (1) der gewünschten Innenauskleidung entsprechend in einzelne Schnitt-Teile (1',1'',2',2'') geschnitten und geformt werden, worauf die beiden Schichten (1,2) flächendeckend und semipermeabel miteinander verbunden werden, dadurch gekennzeichnet, dass vor dem flächendeckenden Aufeinanderbringen der Innenauskleidungs-Schichten (1,2,2a) unabhängig voneinander die Membran (l) und wenigstens ein erster Stoff (2), gegebenenfalls auch ein weiterer textiler Stoff (2a), entsprechend der gewünschten Form zugeschnitten werden, worauf die zugeschnittenen Membranteile (l',l'') nur miteinander, insbesondere durch Schweissen, und die zugeschnittenen Teile (2',2'') des ersten Stoffes (2), unabhängig von diesem auch die Teile (2a',2a'') eines allfälligen weiteren Stoffes (2a), nur miteinander - insbesondere durch Nähen - verbunden werden.

7. Verfahren nach Anspruch 6, dadurch gekennzeichnet, dass vor dem Zuschneiden der Membran-Schicht (1) diese semipermeabel über ihre gesamte gemeinsame Fläche mit einer zweiten textilen Stoff-Schicht (9) verbunden wird, worauf diese beiden Schichten (5b) gemeinsam zugeschnitten und die Schnitt-Teile (5b',5b'') der Innenauskleidungsform entsprechend zusammengefügt, insbesondere zusammengenäht, und an den Nahtlinien miteinander verschweisst bzw. heissgesiegelt werden.

8. Verfahren nach Anspruch 6, dadurch gekennzeichnet, dass der weitere textile Stoff (2a) gegengleich zu dem ersten textilen Stoff (2) zugeschnitten wird.

9. Verfahren nach Anspruch 7, dadurch gekennzeichnet, dass der erste textile Stoff (2) gegengleich zu der aus Membran (1) und zweitem textilen Stoff (9) bestehenden Schicht zugeschnitten wird.

10. Ausrüstungsgegenstand, insbesondere Handschuh, mit einer Innenauskleidung nach einem der Ansprüche 1 bis 5, dadurch gekennzeichnet, dass die Innenauskleidung mit der Innenseite des Ausrüstungsgegenstandes über ihre gesamte Fläche semipermeabel und rutschfest verbunden, insbesondere verklebt ist.

## Claims

1. Inner lining for an item of equipment for at least temporary partial covering of body parts, such as an article of clothing, coverlet, or sleeping bag, comprising at least one layer of cut parts, joined together at connecting lines, of at least one textile material (2), and at least one semipermeable membrane (1), with the individual layers being joined together in a slip-proof and semipermeable manner over their entire common surface, with connecting lines (8a) of membrane parts (1', 1'') being welded, characterized by the connecting lines (8b) of parts (2', 2'') of a first textile material being joined together independently of membrane (1), preferably by sewing.

2. Inner lining according to Claim 1 with at least two textile layers, with membrane layer (1) being disposed between two textile layers (2, 9), characterized by all layers (1, 2, 9) being joined together over their entire common surface in a slip-proof and semipermeable manner, and by membrane layer (1) having common connecting lines (8c) with a second textile material layer (9), said lines being welded or heat-sealed and preferably sewn as well.

3. Inner lining according to Claim 1 or 2, characterized by one or both sides of semipermeably joined textile material layer(s) (2) and membrane layer (1) and at least one additional textile material layer (2a) and/or at least one additional semipermeable membrane layer being provided, in turn joined essentially over the entire surface in a slip-proof and semipermeable fashion with the semipermeably bonded textile material-membrane layer (1, 2), with the connecting lines of the parts of the additional membrane being welded, while the connecting lines (8b) of the other textile material (2a', 2a'') are joined together independently of the first and/or the additional membrane, preferably by sewing.

4. Inner lining according to any one of Claims 1 to 3 characterized by at least two layers (1, 2) being joined together by a semipermeable or partially applied (especially in the form of a plurality of dots on their contact surface), possibly activatable, adhesie layer (4).

5. Inner lining according to any one of the foregoing claims characterized by containing at least two textile material layers joined directly to one another areawise.

6. Method for manufacturing an inner lining according to any one of Claims 1 to 5 wherein at least one textile material layer (2) and at least one membrane layer (1) of the desired inner lining are appropriately cut and shaped into individual cut parts (1', 1'', 2', 2''), whereupon the two layers (1, 2) are joined together in a flush and semipermeable fashion, characterized by the fact that before the flush joining of inner lining layers (1, 2, 2a) independently of one another, membrane (1) and at least a first material (2), and possibly also another textile material (2a), are cut according to the desired shape, whereupon cut membrane parts (1', 1'') are joined only together especially by welding, and cut parts (2', 2'') of first material (2), and independently therefrom also parts (2a', 2a'') of any other material (2a), are joined only together, especially by sewing.

7. Method according to Claim 6 characterized by the fact that before cutting of membrane layer (1), the latter is joined semipermeably over its entire common surface with, a second textile material layer (9), whereupon these two layers (5b) are cut jointly and cut parts (5b', 5b''), corresponding to the shape of the inner lining are joined together, especially by sewing, and welded or heat-sealed to one another at the seams.

8. Method according to Claim 6 characterized by the additional textile material (2a) being cut to match first textile material (2) mirror-image-wise.

9. Method according to Claim 7 characterized by first textile material (2) being cut to match the layer composed of membrane (1) and second textile material (9) mirror-image-wise.

10. Item of equipment, especially a glove with an inner lining according to one of Claims 1 to 5, characterized by the inner lining being joined to the inside of the item of equipment over its entire surface in a semipermeable and slip-proof manner, especially by gluing.

## Revendications

1. Revêtement intérieur pour un objet d'équipement, pour recouvrir au moins temporairement des parties corporelles, telles qu'une pièce d'habillement, une couverture ou un sac de couchage, constitué respectivement d'au moins une couche de parties découpées reliées ensemble en des lignes de liaison et réalisé en au moins un matériau textile (2) d'une part et au moins une membrane (1) semi-perméable d'autre part, les différentes couches étant reliées ensemble de façon à empêcher le ripage et de façon semi-perméable sur la totalité de leur surface commune, caractérisé en ce que les lignes de liaison (8a) des parties de membrane (1, 1') sont soudées, tandis que les lignes de liaison (8b) des parties (2', 2'') d'un premier matériau textile sont reliées ensemble indépendamment de la membrane (1), la liaison étant effectuée de préférence par couture.

2. Revêtement intérieur selon la revendication 1, comportant au moins deux couches textiles, la couche membrane (1) étant disposée entre deux couches textiles (2, 9), caractérisé en ce que toutes les couches (1, 2, 9) sont reliées ensembles de façon à empêcher tout ripage et d'une façon semi-perméable, sur la totalité de leur surface commune, et la couche membrane (1) présentant des lignes de liaison (8c) communes, avec une deuxième couche de matériau textile (9), qui est soudée ou scellée à chaud et, de préférence, est également cousue.

3. Revêtement intérieur selon la revendication 1 ou 2, caractérisé en ce que, sur un ou sur les deux côtés de la ou des couches de matériau textile (2) semi-perméables et de la couche membrane (1), est disposée au moins une autre couche de matériau textile (2a) et/ou au moins une autre couche membrane semi-perméable, qui est reliée à son tour sensiblement sur toute la surface, d'une façon empêchant tout ripage et d'une façon semi-perméable, aux couches matériau textile-membrane (1, 2) reliées de façon semi-perméable, les lignes de liaison des parties de l'autre membrane étant soudées, tandis que les lignes de liaison (8b) de l'autre matériau textile (2a', 2a'') sont reliées ensemble indépendamment de la première et/ou de l'autre membrane, de préférence par couture.

4. Revêtement intérieur selon l'une des revendications 1 à 3, caractérisé en ce qu'au moins deux couches (1, 2) sont reliées ensemble par une couche adhésive (4) semi-perméable ou partiellement perméable - susceptible d'être, le cas échéant, activée - appliquée sur sa surface de contact - se présentant en particulier sous la forme d'une pluralité de points.

5. Revêtement intérieur selon l'une des revendications précédentes, caractérisé en ce qu'il contient au moins deux couches de matériau textile reliées directement ensemble sur la surface.

6. Procédé de fabrication d'un revêtement intérieur selon l'une des revendications 1 à 5, dans lequel au moins une couche de matériau textile (2) et au moins une couche membrane (1) du revêtement intérieur souhaité sont découpées et formées, de manière correspondante, en parties de découpe (1', 1'', 2', 2'') individuelles, suite à quoi les deux couches (1, 2) sont reliées ensemble en couvrant la surface et de façon semi-perméable, caractérisé en ce que, avant l'application l'une sur l'autre, en recouvrant la surface, des couches de revêtement intérieur (1, 2, 2a), indépendamment l'une de l'autre, le matériau membrane (1) et au moins un premier matériau (2), le cas échéant également un autre matériau textile (2a) sont découpés de manière correspondante à la forme souhaitée, suite à quoi les parties membranes (1', 1'') ayant été découpées, sont reliées ensemble en particulier par soudage et les parties (2', 2'') découpées du premier matériau (2) sont reliées ensemble - en particulier par couture - indépendamment de celui-ci, également les parties (2a', 2a'') d'un autre matériau (2a) éventuel.

7. Procédé selon la revendication 6, caractérisé en ce que, avant découpage de la couche membrane (1), celle-ci est reliée de façon semi-perméable, sur la totalité de sa surface commune, à une deuxième couche de matériau textile (9), suite à quoi ces deux couches (5b) sont découpées conjointement et les parties de coupe (5b', 5b'') sont assemblées de manière correspondante à la forme du revêtement intérieur, en particulier sont assemblées par couture, et sont reliées ensemble sur les lignes de couture, par soudage ou scellage à chaud.

8. Procédé selon la revendication 6, caractérisé en ce que l'autre matériau textile (2a) est découpé de façon symétrique par rapport au premier matériau textile (2).

9. Procédé selon la revendication 7, caractérisé en ce que le premier matériau textile (2) est découpé de façon symétrique par rapport à la couche constituée du matériau membrane (1) et du deuxième matériau (9).

10. Objet d'équipement, en particulier gant, avec un revêtement intérieur selon l'une des revendications 1 à 5, caractérisé en ce que le revêtement intérieur est relié de façon semi-perméable et en empêchant tout ripage, à la face intérieure de l'objet d'équipement sur toutes sa surface, la liaison se faisant en particulier par collage.
